# EUROPEAN PATENT SPECIFICATION

(11) **EP 2 406 083 B1**
(45) Date of publication and mention of the grant of the patent: **08.10.2014**
(21) Application number: 09785788.2
(22) Date of filing: 22.01.2009
(51) Int. Cl.: A43B 1/00, A43B 3/00, A43B 23/24, B29D 35/12, B41M 3/00

(54) **ELEMENT OF RUBBER-TYPE MATERIAL WITH IMAGES, AND PROCESS FOR MAKING THE SAME**
AUS EINEM KAUTSCHUKARTIGEN MATERIAL HERGESTELLTES ELEMENT MIT BILDERN UND HERSTELLUNGSVERFAHREN DAFÜR
ELÉMENT DU TYPE MATÉRIAU EN CAOUTCHOUC PRÉSENTANT DES IMAGES ET SON PROCÉDÉ DE PRODUCTION

(43) Date of publication of application: 18.01.2012
(73) Proprietor: Vibram S.p.A., 21041 Albizzate (Varese) (IT)
(72) Inventor: BRAMANI, Marco, I-21041 Albizzate (VA) (IT)
(74) Representative: Feltrinelli, Secondo Andrea
(86) International application number: PCT/IB2009/000102
(87) International publication number: WO 2010/084366

(56) References cited:
- EP-A- 1 604 795
- GB-A- 651 253
- GB-A- 965 957
- US-A- 4 093 694
- US-A1- 2004 028 929
- US-B1- 6 629 292

## Description

### TECHNICAL FIELD OF THE INVENTION

The invention relates to an element made of a rubber-type material exhibiting images, and a process for realising the element. In more detail, the invention concerns an element made of a rubber-type material having a substantially laminar conformation, destined for various uses, on which one or more images are impressed, and the process for realising the element.

### BACKGROUND ART

Objects of common use are known on the market, which are made of a rubber-type material, on which images have been impressed, e.g. photographs, drawings or legends. Some of these objects are constituted, for example, by carpets and mats to be positioned on the floor, or small mouse mats for computers. Other objects of these types are constituted by sheets or panels which function as furnishing components, i.e. components of articles of furniture, seats and the like.

The images on the rubber objects can be impressed, e.g., using traditional printing processes, or can be impressed on sheets made of other materials, e.g. plastic materials, which are then fixed, preferably by gluing, on the rubber objects.

A further category of objects of this type is represented by some types of soles for shoes, e.g. sports or leisure footwear. At present these soles are constituted by portions of various colours which exhibit, e.g., the trade mark of the manufacturer, or which exhibit other graphic motifs.

On the shoe soles, as with other types of objects having primarily a functional use rather than an aesthetic one, traditional image-impressing technologies - direct printing, or other applications of printed sheets - cannot provide satisfactory qualitative results, as the use made of the soles or other objects leads to progressive abrasion and wear of the surface, such that the impressed images tend, over time, to disappear.

Further, a footwear sole, like other objects having a mainly mechanical use, have practical requirements which could not be fully satisfied if the image impressed on the soles were realised by means of traditional technologies. These practical requirements include, for example, the anti-skid function of the sole, or the need for such sole to be resistant to inclement weather conditions, to temperature hikes and the like.

Patent No. US 4093694 discloses a method of permanently marking a rubber product during the curing thereof. The rubber product has a debossed marking of a particular colour in a portion thereof and a layer of rubber is defined as an integral part of the rubber product and surrounds the marking with such layer of rubber having a colour which is different from such particular colour.

Patent application No. US 2004/0028929 A1 discloses means for the attachment of graph or colour of a rubber piece to a rubber main body.

Patent No. GB 651253 discloses moulded plastic body and a method of producing the same. The moulded body is made of synthetic resin plastic material having embedded therein one or more solid elements defining one or more cells or compartments containing a synthetic resin plastic material of a colour different from that of the moulded body.

Patent No. GB 965957 discloses a moulded mat having areas of different colour and a method of realising the same. The moulded mat comprises a principal surface composed of at least partially two different coloured mouldable materials in order to show a patch, for example a trade mark.

Patent No. US 6629292 B1 discloses a method for forming graphical images in semiconductor devices.

### OBJECTS OF THE INVENTION

The technical aim of the present invention is therefore to get around the above-described drawback, by providing a rubber element bearing complex graphic representations and at the same time having the physical and mechanical characteristics required by the use the element will be put to, or the use the object bearing the element will be put to.

Within the scope of the above technical aim, an object of the present invention is to realise a rubber element bearing high-quality images in relation to their sharpness and colouring.

A further object of the present invention is that of perfecting a process for realising a rubber element which leads to obtaining thereon high-quality images having costs which bear comparison to those on rubber elements having traditional characteristics.

A further but not final object of the present invention is to carry out the above-described aim with a simple element which is relatively easy to manufacture, of safe use and efficient functioning, as well as having relatively reduced costs.

The aim and objects are all attained by the present element made of a rubber-type material exhibiting images, comprising portions of different colours, arranged on at least a surface, characterised in that said portions of different colours are ordered on said surface such as to define, by means of chromatic contrast, at least a predetermined image.

### BRIEF DESCRIPTION OF THE DRAWINGS

Further characteristics and advantages of the invention will become clearer and more evident from the detailed description that follows of preferred though not exclusive embodiments of an element made of a rubber-type material provided with images of the invention, and of the process for realisation thereof, illustrated by way of non-limiting example in the accompanying figures of the drawings, in which:
figure 1 is a plan view of a rubber element provided with images according to the invention;
figure 2 is a detail of figure 1.

### EMBODIMENT OF THE INVENTION

In the embodiments that follow, single characteristics, mentioned in relation to specific embodiments, may in reality be interchangeable with other various characteristics existing in other embodiments.

Further, it is to be understood that all details described during the patent granting process which are seen to be of known type are not claimed and are subject to removal from the claims.

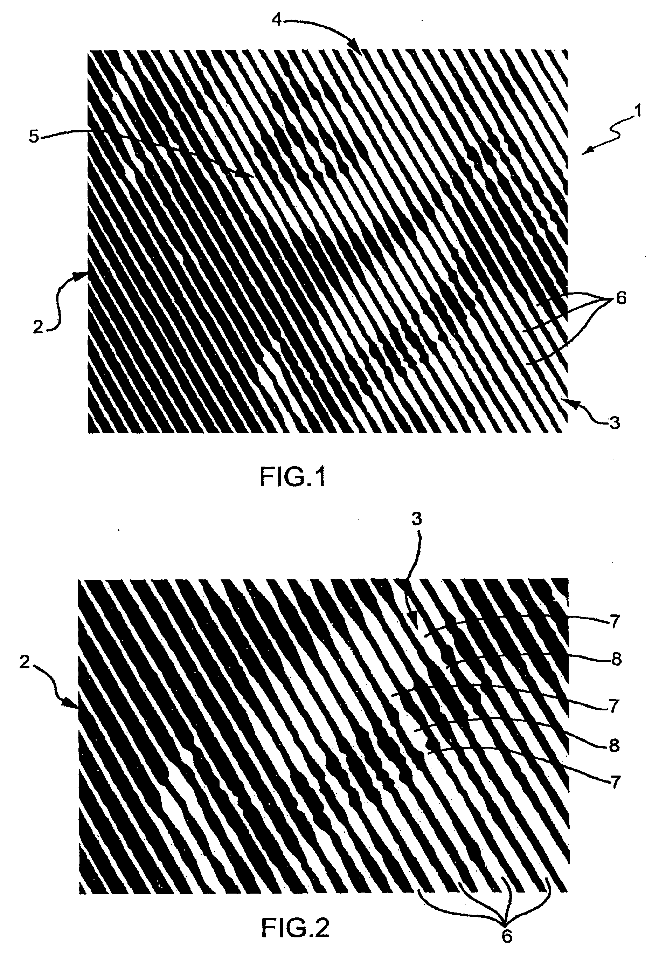

With reference to figure 1, 1 denotes in its entirety an element made of a rubber-type material, exhibiting images according to the invention, in a first preferred though non-exclusive embodiment thereof.

The first preferred embodiment of the element of figure 1 is constituted by a sole for shoes, made of a rubber-type material and the like; figure 1 illustrates a substantially central portion of the sole. In more detail, the element 1 is made of a substantially elastically-yielding material and in particular a material which can be similar to natural or synthetic rubber, or a mixture of rubber and derivatives thereof. In particular, it can be of natural rubber, synthetic rubber, styrole rubber, styrene-butadiene rubber, polybutadeine rubber, nitryl rubber, butylic rubber, foam rubber and various mixtures of rubber or similar materials.

The element 1 comprises portions of different colours, denoted by 2 and 3 in figure 1, arranged on at least a surface, denoted in its entirety by 4. According to the invention, the portions 2, 3 of different colours are advantageously ordered on said surface 4 such as to define at least an image, denoted overall by 5, thanks to the optical contrast effect between the colours.

In the present embodiment of the element of the invention the portions 2, 3 are, in more detail, in two colours, for example black and white. The image 5, by means of the contrast between the two colours, appears to be in scales of grey, with lighter zones and darker zones.

Obviously other colours can be selected, being substantially contrasting, such as to realise images which are in scales of other hues.

Further, a greater number of colours than two can be used, in order to realise images having more complex colour tones. Naturally, on increasing the number of the colours selected, the complexity and cost of the technological process used for obtaining the rubber element will also increase.

The image 5 which appears on the element 1 can be constituted for example by a photographic image in colour, in black and white or in scales of other colours; similarly, the image 5 can be constituted by a drawing, more or less complex, specially realised in relation to the needs of the application.

The image 5 is advantageously of a computer-graphically processed type, using for example a real photograph or a real drawing as a starting point. This aspect will be better clarified in the following description, with special reference to the process of realising the element 1 of the invention.

The portions 2, 3 of different colour of the element 1 can be realised in the same material as the rubber type, or can be realised using materials that are different to one another, for example with various mixtures of materials of a same materials family, should applicational needs require that the two portions 2, 3 possess different physical and/or mechanical characteristics.

In more detail, the portions of different colour advantageously comprise a first portion 2 of a first colour, e.g. black, or another dark colour, which substantially functions as a base of the element 1, and a second portion 3 of a second colour, for example white or another light colour, comprising in turn a plurality of areas 6 which define the image 5 in graphic combination with the first portion 2 of the first colour, thanks to the contrast between the light colours and the dark colours.

In the present embodiment of the element 1 of the invention the first portion 2 of the first colour preferably constitutes the bearing structure of the footwear sole, or a part thereof: it can constitute, for example, the tread of the sole. The areas 6 of the second portion 3 of the second colour, on the other hand, are distributed in an orderly fashion on the first portion 2 of the first colour such as to define the predetermined image 5.

In relation to the nature of the image to be realised - photograph, drawing, wordings and the like - the areas 6 of the second portion 3 of the second colour can be realised with geometries and dimensions which are specially researched and calculated. In particular, in order to obtain high-quality photographic images, it has been observed - with reference to the accompanying figures 1, 2 - that it is advantageous to choose areas 6 of the second portion 3 conformed in substantially elongate and parallel stripes, which have variable respective thicknesses in relation to the particular area of the image 5 they are to define.

For example, in order to realise areas of the image which have substantially dark tones, the areas 6 of the second portion 3 must be thin and/or slightly thickened, such as to exalt, at a certain distance of observation, the dark colour of the first portion 2, i.e. the background colour. Differently, in order to realise areas of the image which have substantially pale tones, the areas of the second portion 3 must be of a greater thickness and/or be denser, such as to exalt, seen at a distance, the lighter colours.

Figure 2, in particular, highlights how the sections of a different thickness of each of the areas 6 - denoted in figure 2 by 7, 8 - define, by an optical effect of chromatic contrast, a determined area in the image 5 which is distinguishable at a certain distance.

In the element of the invention, the surface 5, made up of the first portion 2 and the second portion 3, can be substantially smooth, i.e. without parts in relief. Note however that should application requirements be such - e.g. in order to produce a tread of a shoe sole - the above-mentioned areas 6 of the second portion 3 may be realised substantially in relief with respect to the first portion 2, or vice versa.

In a further embodiment of the invention, not illustrated in the figures, the element 1 can be constituted by a carpet or mat; in other embodiments, not illustrated in the figures of the drawings, the element 1 can be constituted, e.g., by a furnishing unit, or the like, without any limitations.

The manufacturing process of the element 1, in a preferred but not exclusive embodiment, comprises the stages that will be described herein below.

In a first stage the image 5 to be reproduced on the element 1 is defined - e.g. a digitalized photograph, or a digitalized drawing - in colour scales, e.g. in scales of greys if the selected colours are black and white. This stage of definition is conveniently realised using a computer program for photo-retouching, or other equivalent tools.

There then follows a stage of rasterisation of said image 5, realised using a computer program for graphic image processing, or other equivalent tools. The stage of rasterisation enables an image of a "raster" type to be obtained, i.e. constituted, as is known, by a pixel grid.

There follows a stage of vectorialisation of the image 5, also done using a computer program for graphic image processing, or other equivalent tools. Such vectorialisation stage enables a vectorial image to be obtained, i.e. one which is described, as is known, by an assembly of geometric primitives describing points, lines, curves and polygons, to which colours and even nuances can be attributed. The known advantages of vectorial graphics are mainly higher quality, greater data compression and an easier management of any eventual changes and modifications, as well as independence of resolution.

The image 5 thus realised is then used in a subsequent stage of the process according to the invention for creating a mould for the element 1, which mould has the geometric characteristics corresponding to those of the image to be obtained, both from the point of view of the edges and from that of the colour nuances and hues. The mould is advantageously realised by means of CAD-CAM type computer programs and devices, or using other equivalent tools, exploiting the advantage of being able to use a vectorialised image.

Alternatively, a mould having the same geometric characteristics, better described herein below, can however be realised in a traditional way using CAD-CAM type computer programs and devices, even without proceeding to the vectorialisation of the image.

In more detail, the mould exhibits a plurality of cavities and/or grooves distributed correspondingly to the areas 6 of the second portion 3 or the conformation of the first portion 2, according to the product to be obtained. For a better understanding both of the characteristics of the mould and the moulding process for a two-colour rubber component, however, reference is made to European patent application no. EP 1604795 A2, in the name of the present applicant.

In a final stage of the process, using a mould realised as described in the preceding stages, the element 1 is moulded: as described in the above-mentioned European patent application, EP 1604795 A2, the moulding of the element 1 is preferably done in two successive sub-stages, each relating to a respective colour of the element to be realised.

For example, a first hot-moulding sub-stage of the second portion 3 with the respective areas 6 - corresponding to the above mentioned cavities and/or the grooves of the mould - can be provided, as well as a second hot-moulding sub-stage, with a further mould, of the first portion 2, which is superposed on and adheres to the second portion 3 by vulcanisation: naturally the further mould follows the geometry of the structural base of the element to be realised.

A further embodiment of the realisation process of the element 1 according to the invention comprises a stage of hot-moulding the first portion 2 of the first colour, a stage of hot-moulding the second portion 3 of the second colour on the first portion 2 - which second colour thus adheres to the latter by vulcanisation - and a stage of working the surface of the second portion 3 by means of the machine tool. The last-mentioned stage consists, in particular, in removing rubber material from the second portion 3 such as to edge the areas 6 which will define the image 5 to be realised. In more detail, the removal of material, done using special tools, e.g. cutter-trimmers, of appropriate geometry and turned at a suitable cutting speed, enables a distribution of cavities and/or grooves to be obtained in the second portion 3 which penetrate into the thickness of the second portion 3 up to reaching the surface of the first portion 2, which is thus uncovered such that the desired contrast with the areas 6 of the second portion 3 is achieved, and the desired image 5 defined.

It is stressed that the stage of removing rubber material from the second portion 3 of the element 1 can more effectively be performed after first cooling the element 1 to a suitable temperature (e.g. about - 50°), such as to bring the material into a condition of better workability than that which would be obtained at normal ambient temperature.

A further embodiment of the realisation process of the element 1 according to the invention comprises a stage of hot-moulding the first portion 2 of the first colour. There follows a stage of working said first portion 2 by means of the machine tool. During this working operation, cavities and/or grooves of suitable sizes and suitable surface density are made by removal of material, in relation to the various areas of the image 5 to be obtained. The process further comprises a stage of moulding the second portion 3 of the element 1, which consists in particular in the depositing of the material of the second colour in the cavities and/or the grooves realised in the first portion 2, such as to define the areas 6 of the second portion as described above and to realise the desired chromatic contrast.

This final moulding stage of the second portion 3 can be made in various ways. For example, a moulding of a substantially uniform layer of material of the second colour on the first portion 2 of the first colour can be performed - such that the second colour penetrates into the cavities and/or the grooves realised in the preceding stage - followed by a sort of scraping of the surface thus moulded by removing the material of the second colour in excess. In this way a surface 4 will be defined which is substantially smooth and characterised by chromatic contrasts realising the image.

In a further moulding modality of the second portion 3, on the other hand, the material of the second colour can be deposited directly and exclusively in the cavities and/or the grooves present in the first portion, using a mould or a specially-realised printing template. In this latter modality, contrary to the previously-described one, the areas 6 of the second portion 3 thus realised can also be produced in relief with respect to the surface of the first portion 2.

The invention thus attains the set objects therefor.

The element made of a rubber-type material according to the invention is provided with graphic representations which are pleasing and sharp and, at the same time, is provided with physical and mechanical characteristics which are optimal even for special functional uses - such as e.g. on the soles of shoes and mats - such that the products constituted by such element or which incorporate the element as a component are characterised by high quality and resistance to wear and tear.

Further, the realisation process of the aforementioned element is particularly swift, precise and cheap, and can be performed using means and tools which are essentially of known type and traditional.

The invention as it is conceived herein is susceptible of numerous modifications and variants, all falling within the scope of the inventive concept.

All details of the embodiments described above can be replaced by other technically-equivalent details.

The materials used, as well as the shapes and dimensions thereof, may in practice be of any type according to needs, without the invention's thus forsaking the scope of protection as defined in the following claims.

## Claims

1. Element made of a rubber-type material exhibiting images, comprising portions (2, 3) of different colours arranged on at least a surface (4), wherein said portions (2, 3) of different colours are ordered on said surface (4) such as to define, by chromatic contrast, at least a predetermined image (5), said portions (2, 3) of different colour comprising at least a first portion (2), of at least a first colour, which constitutes a sort of a base of the element, and at least a second portion (3) of at least a second colour, comprising in turn a plurality of areas (6) which define said image (5), in chromatic contrast with said portion of said first colour (2), **characterized by** the fact that each of said areas (6) comprises at least a strip comprising sections (7), (8) of a variable thickness along a length thereof.

2. Element as claimed in claim 1, **characterized by** the fact that said areas (6) of the second portion (3) are conformed in elongate and parallel stripes, which have variable respective thicknesses in relation to the particular area of the image (5) they are to define.

3. Element as claimed in any one of the previous claims, **characterized by** the fact that said areas (6) of said second portion (3) have respective surface dimensions and/or densities which are adapted to define zones of said image (5) which zones are distinguished by different colours due to chromatic contrast between said first portion (2) and said second portion (3).

4. Element as claimed in any one of the previous claims, **characterized by** the fact that said surface (4) is substantially smooth.

5. Element as claimed in any one of the previous claims, **characterized by** the fact that said areas (6) of said second portion (3) of said second colour are substantially in relief with respect to said first portion (2) of said first colour.

6. Element as claimed in any one of the previous claims, **characterized by** the fact that said first portion (2) of said first colour is substantially in relief with respect to said areas (6) of said second portion (3) of said second colour.

7. Element as claimed in any one of the previous claims, **characterized by** the fact that said first portion (2) and second portion (3) of different colours are realised in a same rubber-type material.

8. Element as claimed in any one of the previous claims, **characterized by** the fact that said first portion (2) and second portion (3) of different colours are realised respectively in different rubber-type materials.

9. Element as claimed in any one of the previous claims, **characterized by** the fact that said image (5) is graphically computer-processed.

10. Element as claimed in any one of the previous claims, comprising at least a sole for shoes.

11. Element as claimed in any one of the previous claims, comprising at least a mat.

12. Element as claimed in any one of the previous claims, comprising at least a furnishing component.

13. Process for realising an element (1) in a rubber-type material exhibiting images, comprising the following stages:
- defining at least an image (5) to be reproduced on said element (1) in scales of colours;
- rasterising said image (5);
- realising at least a mould for said element (1) corresponding to said image (5);
- moulding said element (1) using at least said mould,
- vectorialising said image (5),
wherein said element (1) comprises portions (2), (3) of different colours arranged on at least a surface (4) and ordered such as to define said image (5), wherein said portions (2), (3) of different colours comprise at least a first portion (2) of at least a first colour, which constitutes a sort of a base of the element, and at least a second portion (3) of at least a second colour, comprising in turn a plurality of areas (6) which define said image (5), in chromatic contrast with said portion of said first colour (2), **characterized by** the fact that each of said areas (6) comprises at least a strip comprising sections (7), (8) of a variable thickness along a length thereof.

14. Process as claimed in claim 13, **characterized by** the fact that said image (5) is defined in scales of at least two colours.

15. Process as claimed in any one of claims from 13 to 14, **characterized by** the fact that said areas (6) of said second portion (3) have respective surface dimensions and densities adapted to define areas of said image (5) which areas are distinguished by different colours due to chromatic contrast between said first portion (2) and said second portion (3).

16. Process as claimed in any one of claims from 13 to 15, **characterized by** the fact that said surface (4) is substantially smooth.

17. Process as claimed in any one of claims from 13 to 16, **characterized by** the fact that said areas (6) of said second portion (3) of said second colour are substantially in relief with respect to said first portion (2) of said first colour.

18. Process as claimed in any one of claims from 13 to 17, **characterized by** the fact that said first portion (2) of said first colour is substantially in relief with respect to said areas (6) of said second portion (3) of said second colour.

19. Process as claimed in any one of claims from 13 to 18, **characterized by** the fact that said mould for said element (1) comprises a plurality of cavities and/or grooves positioned such as to correspond with said areas (6) of said second portion (3) of said second colour.

20. Process as claimed in any one of claims from 13 to 19, **characterized by** the fact that at least said stage of defining said image (5) in scales of colours is realised by a photo-retouching computer program.

21. Process as claimed in any one of claims from 13 to 20, **characterized by** the fact that at least said stage of rasterising said image (5) is realised by a computer program for graphic image processing.

22. Process as claimed in any one of claims from 13 to 21, **characterized by** the fact that at least said stage of vectorialising said image (5) is realised by a computer program for graphic image processing.

23. Process as claimed in any one of claims from 13 to 22, **characterized by** the fact that said stage of realising said mould for said element (1) is performed using CAD-CAM type computer programs and devices.

## Patentansprüche

1. Bilder zeigendes Element aus einem gummiartigen Material, das Abschnitte (2, 3) unterschiedlicher Farben umfasst, die auf mindestens einer Oberfläche (4) gestaltet sind, wobei diese Abschnitte (2, 3) unterschiedlicher Farben derart auf dieser Oberfläche (4) angeordnet sind, dass sie durch chromatischen Kontrast mindestens ein vorbestimmtes Bild (5) definieren, wobei diese Abschnitte (2, 3) unterschiedlicher Farben mindestens einen ersten Abschnitt (2) mit mindestens einer ersten Farbe, der eine Art Grundfläche des Elements bildet, und mindestens einen zweiten Abschnitt (3) mit mindestens einer zweiten Farbe umfassen, der seinerseits eine Vielzahl von Bereichen (6) umfasst, die das Bild (5) in chromatischem Kontrast zum Abschnitt mit der ersten Farbe (2) definieren, **dadurch gekennzeichnet, dass** jeder dieser Bereiche (6) mindestens einen Streifen umfasst, der Teilstücke (7), (8) mit einer variablen Dicke entlang einer Länge desselben umfasst.

2. Element nach Anspruch 1, **dadurch gekennzeichnet, dass** die Bereiche (6) des zweiten Abschnitts (3) als längliche und parallele Streifen gestaltet sind, die variable jeweilige Dicken in Bezug auf den besonderen Bereich des Bilds (5) aufweisen, den sie definieren.

3. Element nach einem der vorhergehende Ansprüche, **dadurch gekennzeichnet, dass** die Bereiche (6) des zweiten Abschnitts (3) jeweilige Oberflächemaße und/oder -dichten aufweisen, die geeignet sind, Zonen des Bilds (5) zu definieren, wobei diese Zonen durch verschiedene Farben aufgrund eines chromatischen Kontrasts zwischen dem ersten Abschnitt (2) und dem zweiten Abschnitt (3) unterschieden sind.

4. Element nach einem der Vorhergehenden Ansprüche, **dadurch gekennzeichnet, dass** die Oberfläche (4) im Wesentlichen weich ist.

5. Element nach einem der Vorhergehenden Ansprüche, **dadurch gekennzeichnet, dass** die Bereiche (6) des zweiten Abschnitts (3) mit der zweiten Farbe im Wesentlichen erhaben gegenüber dem ersten Abschnitt (2) mit der ersten Farbe sind.

6. Element nach einem der Vorhergehenden Ansprüche, **dadurch gekennzeichnet, dass** der erste Abschnitt (2) mit der ersten Farbe im Wesentlichen erhaben gegenüber den Bereichen (6) des zweiten Abschnitts (3) mit der zweiten Farbe ist.

7. Element nach einem der vorhergehende Ansprüche, **dadurch gekennzeichnet, dass** der erste Abschnitt (2) und der zweite Abschnitt (3) unterschiedlicher Farben aus einem gleichen gummiartigen Material ausgeführt sind.

8. Element nach einem der Vorhergehenden Ansprüche, **dadurch gekennzeichnet, dass** der erste Abschnitt (2) und der zweite Abschnitt (3) unterschiedlicher Farben jeweils aus verschiedenen gummiartigen Materialien ausgeführt sind.

9. Element nach einem der Vorhergehenden Ansprüche, **dadurch gekennzeichnet, dass** das Bild (5) graphisch verarbeitet ist.

10. Element nach einem der vorhergehenden Ansprüche, das mindestens eine Sohle für Schuhe umfasst.

11. Element nach einem der vorhergehenden Ansprüche, das mindestens eine Matte umfasst.

12. Element nach einem der vorhergehenden Ansprüche, das mindestens eine Einrichtungskomponente umfasst.

13. Verfahren zum Herstellen eines Bilder zeigenden Elements (1) aus einem gummiartigen Material, das die folgenden Phasen umfasst:
- Definieren von mindestens einem auf dem Element (1) zu reproduzierenden Bild (5) in Farbskalen;
- Rastern dieses Bilds (5);
- Herstellen von mindestens einer Form für dieses Element (1), die dem Bild (5) entspricht;
- Formen dieses Elements (1) unter Verwendung zumindest dieser Form;
- Vektorisieren dieses Bilds (5);
wobei dieses Element (1) Abschnitte (2), (3) unterschiedlicher Farben umfasst, die auf mindestens einer Oberfläche (4) gestaltet und so angeordnet sind, dass sie das Bild (5) definieren, wobei diese Abschnitte (2), (3) unterschiedlicher Farben mindestens einen ersten Abschnitt (2) mit mindestens einer ersten Farbe, der eine Art Grundfläche des Elements bildet, und mindestens einen zweiten Abschnitt (3) mit mindestens einer zweiten Farbe umfassen, der seinerseits eine Vielzahl von Bereichen (6) umfasst, die das Bild (5) in chromatischem Kontrast zum Abschnitt mit der ersten Farbe (2) definieren, **dadurch gekennzeichnet, dass** jeder dieser Bereiche (6) mindestens einen Streifen umfasst, der Teilstücke (7), (8) mit einer variablen Dicke entlang einer Länge desselben umfasst.

14. Verfahren nach Anspruch 13, **dadurch gekennzeichnet, dass** das Bild (5) in Skalen von mindestens zwei Farben definiert wird.

15. Verfahren nach einem der Ansprüche von 13 bis 14, **dadurch gekennzeichnet, dass** die Bereiche (6) des zweiten Abschnitts (3) jeweilige Oberflächenmaße und -dichten aufweisen, die geeignet sind, Bereiche des Bilds (5) zu definieren, wobei diese Bereich durch verschiedene Farben aufgrund eines chromatischen Kontrasts zwischen dem ersten Abschnitt (2) und dem zweiten Abschnitt (3) unterschieden sind.

16. Verfahren nach einem der Ansprüche von 13 bis 15, **dadurch gekennzeichnet, dass** die Oberfläche (4) im Wesentlichen weich ist.

17. Verfahren nach einem der Ansprüche von 13 bis 16, **dadurch gekennzeichnet, dass** die Bereiche (6) des zweiten Abschnitts (3) mit der zweiten Farbe im Wesentlichen erhaben gegenüber dem ersten Abschnitt (2) mit der ersten Farbe sind.

18. Verfahren nach einem der Ansprüche von 13 bis 17, **dadurch gekennzeichnet, dass** der erste Abschnitt (2) mit der ersten Farbe im Wesentlichen erhaben gegenüber den Bereichen (6) des zweiten Abschnitts (3) mit der zweiten Farbe ist.

19. Verfahren nach einem der Ansprüche von 13 bis 18, **dadurch gekennzeichnet, dass** die Form für das Element (1) eine Vielzahl von Hohlräumen und/oder Rillen umfasst, die so angeordnet sind, dass sie mit den Bereichen (6) des zweiten Abschnitts (3) mit der zweiten Farbe übereinstimmen.

20. Verfahren nach einem der Ansprüche von 13 bis 19, **dadurch gekennzeichnet, dass** zumindest die Phase des Definierens des Bilds (5) in Farbskalen mit Hilfe eines Computerprogramms zum Retuschieren von Fotos ausgeführt wird.

21. Verfahren nach einem der Ansprüche von 13 bis 20, **dadurch gekennzeichnet, dass** zumindest die Phase des Rasterns des Bilds (5) mit einem Computerprogramm für die graphische Bildbearbeitung ausgeführt wird.

22. Verfahren nach einem der Ansprüche von 13 bis 21, **dadurch gekennzeichnet, dass** zumindest die Phase des Vektorisierens des Bilds (5) mit einem Computerprogramm für die graphische Bildbearbeitung ausgeführt wird.

23. Verfahren nach einem der Ansprüche von 13 bis 22, **dadurch gekennzeichnet, dass** die Phase des Herstellens der Form für das Element (1) unter Verwendung von Computerprogrammen und Geräten vom Typ CAD-CAM ausgeführt wird.

## Revendications

1. Elément constitué d'un matériau de type caoutchouc présentant des images, comprenant des portions (2, 3) de couleurs différentes agencées sur au moins une surface (4), dans lequel lesdites portions (2, 3) de couleurs différentes sont ordonnées sur ladite surface (4) de manière à définir, par contraste chromatique, au moins une image prédéterminée (5), lesdites portions (2, 3) de couleur différente comprenant au moins une première portion (2), d'au moins une première couleur, qui constitue un genre de base de l'élément, et au moins une deuxième portion (3) d'au moins une deuxième couleur, comprenant à son tour une pluralité de régions (6) qui définissent ladite image (5), en contraste chromatique avec ladite portion de ladite première couleur (2), **caractérisé en ce que** chacune desdites régions (6) comprend au moins une bande comprenant des sections (7), (8) d'une épaisseur variable suivant leur longueur.

2. Elément selon la revendication 1, **caractérisé en ce que** lesdites régions (6) de la deuxième portion (3) sont conformées en bandes allongées et parallèles, qui ont des épaisseurs respectives variables en fonction de la région particulière de l'image (5) qu'elles doivent définir.

3. Elément selon l'une quelconque des revendications précédentes, **caractérisé en ce que** lesdites régions (6) de ladite deuxième portion (3) ont des dimensions de surface et/ou des densités respectives qui sont adaptées pour définir des zones de ladite image (5) lesquelles zones sont différenciées par des couleurs différentes dues à un contraste chromatique entre ladite première portion (2) et ladite deuxième portion (3).

4. Elément selon l'une quelconque des revendications précédentes, **caractérisé en ce que** ladite surface (4) est sensiblement lisse.

5. Elément selon l'une quelconque des revendications précédentes, **caractérisé en ce que** lesdites régions (6) de ladite deuxième portion (3) de ladite deuxième couleur sont sensiblement en relief par rapport à ladite première portion (2) de ladite première couleur.

6. Elément selon l'une quelconque des revendications précédentes, **caractérisé en ce que** ladite première portion (2) de ladite première couleur est sensiblement en relief par rapport auxdites régions (6) de ladite deuxième portion (3) de ladite deuxième couleur.

7. Elément selon l'une quelconque des revendications précédentes, **caractérisé en ce que** lesdites première portion (2) et deuxième portion (3) de couleurs différentes sont réalisées en un même matériau de type caoutchouc.

8. Elément selon l'une quelconque des revendications précédentes, **caractérisé en ce que** lesdites première portion (2) et deuxième portion (3) de couleurs différentes sont réalisées respectivement en matériaux de type caoutchouc différents.

9. Elément selon l'une quelconque des revendications précédentes, **caractérisé en ce que** ladite image (5) est traitée par ordinateur graphiquement.

10. Elément selon l'une quelconque des revendications précédentes, comprenant au moins une semelle pour chaussures.

11. Elément selon l'une quelconque des revendications précédentes, comprenant au moins un tapis.

12. Elément selon l'une quelconque des revendications précédentes, comprenant au moins un composant d'ameublement.

13. Procédé pour réaliser un élément (1) d'un matériau de type caoutchouc présentant des images, comprenant les étapes suivantes :
- la définition d'au moins une image (5) à reproduire sur ledit élément (1) en échelles de couleurs ;
- la rastérisation de ladite image (5) ;
- la réalisation d'au moins un moule pour ledit élément (1) correspondant à ladite image (5) ;
- le moulage dudit élément (1) en utilisant au moins ledit moule,
- la vectorisation de ladite image (5),
dans lequel ledit élément (1) comprend des portions (2), (3) de couleurs différentes agencées sur au moins une surface (4) et ordonnées de manière à définir ladite image (5), dans lequel lesdites portions (2), (3) de couleurs différentes comprennent au moins une première portion (2) d'au moins une première couleur, qui constitue un genre de base de l'élément, et au moins une deuxième portion (3) d'au moins une deuxième couleur, comprenant à son tour une pluralité de régions (6) qui définissent ladite image (5), en contraste chromatique avec ladite portion de ladite première couleur (2), **caractérisé en ce que** chacune desdites régions (6) comprend au moins une bande comprenant des sections (7), (8) d'une épaisseur variable suivant leur longueur.

14. Procédé selon la revendication 13, **caractérisé en ce que** ladite image (5) est définie dans des échelles d'au moins deux couleurs.

15. Procédé selon l'une quelconque des revendications 13 à 14, **caractérisé en ce que** lesdites régions (6) de ladite deuxième portion (3) ont des dimensions de surface et des densités respectives adaptées pour définir des zones de ladite image (5) lesquelles zones sont différenciées par des couleurs différentes dues à un contraste chromatique entre ladite première portion (2) et ladite deuxième portion (3).

16. Procédé selon l'une quelconque des revendications 13 à 15, **caractérisé en ce que** ladite surface (4) est sensiblement lisse.

17. Procédé selon l'une quelconque des revendications 13 à 16, **caractérisé en ce que** lesdites régions (6) de ladite deuxième portion (3) de ladite deuxième couleur sont sensiblement en relief par rapport à ladite première portion (2) de ladite première couleur.

18. Procédé selon l'une quelconque des revendications 13 à 17, **caractérisé en ce que** ladite première portion (2) de ladite première couleur est sensiblement en relief par rapport auxdites régions (6) de ladite deuxième portion (3) de ladite deuxième couleur.

19. Procédé selon l'une quelconque des revendications 13 à 18, **caractérisé en ce que** ledit moule pour ledit élément (1) comprend une pluralité de cavités et/ou rainures positionnées de manière à correspondre auxdites régions (6) de ladite deuxième portion (3) de ladite deuxième couleur.

20. Procédé selon l'une quelconque des revendications 13 à 19, **caractérisé en ce qu'**au moins ladite étape de définition de ladite image (5) en échelle de couleurs est réalisée par un programme informatique de retouche photo.

21. Procédé selon l'une quelconque des revendications 13 à 20, **caractérisé en ce qu'**au moins ladite étape de rastérisation de ladite image (5) est réalisée par un programme informatique pour le traitement d'image graphique.

22. Procédé selon l'une quelconque des revendications 13 à 21, **caractérisé en ce qu'**au moins ladite étape de vectorisation de ladite image (5) est réalisée par un programme informatique pour le traitement d'image graphique.

23. Procédé selon l'une quelconque des revendications 13 à 22, **caractérisé en ce que** ladite étape de réalisation dudit moule pour ledit élément (1) est exécutée en utilisant des dispositifs et programmes informatiques de type CAD-CAM.
